# EUROPÄISCHE PATENTSCHRIFT

(11) **EP 4 150 284 B1**
(45) Veröffentlichungstag und Bekanntmachung des Hinweises auf die Patenterteilung: **01.04.2026**
(21) Anmeldenummer: 21707935.9
(22) Anmeldetag: 23.02.2021
(51) Int. Cl.: F41A 17/00, F41A 17/08, F41H 7/02, B60W 50/08

(54) **VERFAHREN ZUR FESTLEGUNG VON SICHERHEITSFUNKTIONEN IN EINEM FAHRZEUG SOWIE ENTSPRECHENDE VORRICHTUNG ZUR KONTROLLE UND ANZEIGE DER VORGENANNTEN SICHERHEITSFUNKTIONEN**
METHOD FOR ESTABLISHING SAFETY FUNCTIONS IN A VEHICLE, AND CORRESPONDING DEVICE FOR CHECKING AND DISPLAYING SAID SAFETY FUNCTIONS
PROCÉDÉ POUR ÉTABLIR DES FONCTIONS DE SÉCURITÉ DANS UN VÉHICULE, ET DISPOSITIF CORRESPONDANT POUR VÉRIFIER ET AFFICHER LESDITES FONCTIONS DE SÉCURITÉ

(30) Priorität: 14.05.2020 DE 102020113063
(43) Veröffentlichungstag der Anmeldung: 22.03.2023
(73) Patentinhaber: Rheinmetall Landsysteme GmbH, 29345 Südheide (DE)
(72) Erfinder: BRITZEN, Rüdiger, 29345 Unterlüß (DE); JOST, Paul, 22047 Hamburg (DE); SCHMIDT, Holger, 29525 Uelzen (DE)
(74) Vertreter: HKW Intellectual Property PartG mbB
(86) Internationale Anmeldenummer: PCT/EP2021/054368
(87) Internationale Veröffentlichungsnummer: WO 2021/228446

(56) Entgegenhaltungen:
- DE-T2- 69 816 907
- US-A1- 2009 164 045
- LEFT P W: "TYPE 90 TANK A MILESTONE FOR JAPANESE INDUSTRY", INTERNATIONAL DEFENSE REVIEW, JANE'S INFORMATION GROUP, COULSDON, SURREY, GB, vol. 24, no. 6, 1 June 1991 (1991-06-01), pages 631 - 634, XP000220079, ISSN: 0020-6512

## Beschreibung

Die vorliegende Erfindung betrifft ein Verfahren zur Festlegung von Sicherheitsfunktionen in einem Fahrzeug sowie eine entsprechende Vorrichtung zur Kontrolle und Anzeige der vorgenannten Sicherheitsfunktionen.

Entsprechende Verfahren sowie Vorrichtungen werden in Fahrzeugen, insbesondere militärischen Fahrzeugen benötigt, um unterschiedliche Szenarien bzw. Betriebsmodi darstellen zu können. Das einfachste Szenarium ist dabei ein Friedensbetrieb des Fahrzeugs, welches ausschließlich im Frieden stattfinden soll, sowie ein Verteidigungsbetrieb im Verteidigungsfall.

Die Sicherheit eines solchen Systems ist untrennbar mit dem Begriff des sicheren Zustandes verbunden. Waffensysteme zeichnen sich dadurch aus, dass sie beim Gegner einen Schaden bewirken sollen. Dieser gewollte Schaden ist dabei ein Teil der bestimmungsgemäßen Verwendung des Systems.

Sobald dieser potentielle Schaden, eigene Kräfte, Personen oder unbeteiligte Dritte gefährdet, wird er zum Risiko. Dieses Risiko muss sowohl durch den Hersteller als auch durch den Betreiber so weit wie möglich reduziert werden. Zu diesem Zweck werden in der Regel Sicherheitsfunktionen eingesetzt.

Entsprechende Sicherheitsfunktionen bestehen beispielsweise darin, das System im Betrieb zu überwachen, um bei Eintritt bestimmter vorher festgelegten Ereignissen, wie zum Beispiel Ausfall einer Komponente, Signalunterbrechung usw., den im Vorfeld definierten sicheren Zustand herbeizuführen.

Bedingt durch unterschiedliche Szenarien entsteht dabei eine Herausforderung. Der sichere Zustand im Frieden kann zum Beispiel als ein sofortiges Blockieren der Waffe oder der Turmbewegung eines Gefechtsfahrzeugs festgelegt sein. Dies lässt sich technisch vergleichsweise einfach umsetzen. Dies führt aber auch dazu, dass der Zustand auch im Einsatz oder Verteidigungsbetrieb passieren wird. Der herbeigeführte Zustand in den beiden letzten Fällen kann nicht als sicher akzeptiert werden. Offensichtlich wechseln die Definition des sicheren Zustands eines Gefechtsfahrzeuges zusammen mit dem Szenario bzw. Betriebsmodus des Fahrzeugs.

Dieses Problem wird bekannterweise mithilfe eines sogenannten Gefechtsschalters gelöst. Dabei stellt der Hersteller dem Nutzer eine Möglichkeit zur Verfügung, die integrierten Sicherheitsfunktionen zumindest teilweise zu umgehen. Damit wird die Sicherheit bewusst zum Vorteil der Verfügbarkeit verringert.

Ein typisches Beispiel dafür ist ein Luken-Überwachungssystem, welches das Feuern einer Waffe verhindert, wenn mindestens eine der Luken nicht geschlossen ist. Der Nachteil eines solchen Systems besteht darin, dass wenn der Lukensensor ausgefallen ist, das Feuer permanent verhindert wird. Dabei zeigt sich in der Praxis die problematische Seite dieser Lösung. Sobald der Sensor ausgefallen ist, ist die Waffe nicht mehr nutzbar.

So ist es für den Nutzer sehr verlockend, den Gefechtsschalter zu nutzen, um kleinere Ausfälle oder Fehler im System zu ignorieren. Gleichzeitig kann der Eindruck einer falschen Sicherheit entstehen, weil der Bediener sich der Risiken nicht bewusst ist, welche er in diesem Moment eingeht. Dieses ist ein besonders ernstzunehmendes Problem vor dem Hintergrund immer komplexer werdender Systeme. Die äußeren Rahmenbedingungen der Einsätze werden ebenfalls immer komplexer.

Der Kommandant eines Gefechtsfahrzeugs im Einsatz ist permanent starken, physischen und mentalen Belastungen ausgesetzt. Ihm ist es nahezu unmöglich, die gesamte Palette von Risiken zu überblicken, wenn er den Gefechtsschalter aktiviert.

Ein besonders wichtiger Aspekt ist an dieser Stelle die Akzeptanz von Risiken und das Abwägen von Risiken gegeneinander. Im Friedensbetrieb würden selbst kleinere Sachschäden, zum Beispiel durch Kollision des Waffenrohres mit der Luke als nicht akzeptabel bewertet werden. Im Verteidigungsbetrieb wäre jedoch jedes Risiko akzeptabel, welches hilft, sich der gegnerischen Waffenwirkung zuverlässig zu entziehen.

Ein entsprechender Gefechtsschalter ist beispielsweise aus der DE 69816907 T2 bekannt. Dabei kann der Gefechtsschalter Waffen deaktivieren oder aktivieren.

Es ergeben sich durch unterschiedliche Sicherheitsfunktionen und der Funktion des Gefechtsschalters diverse Entscheidungsmöglichkeiten, das ein oder andere Risiko zu akzeptieren oder es bewusst als nicht akzeptabel zu verwerfen. Diese Entscheidungen werden durch die "Rules of Engagement" (RoE) zusätzlich erschwert. Der Kommandant des Fahrzeuges kann potenziell bestimmte Risiken übersehen und ungewollt ein Schadensfall provozieren.

Dieser Entscheidungsraum kann je nach Szenario durch technische Mittel, wie zum Beispiel ein skalierbare Sicherheitskonzept, sinnvoll eingeschränkt werden. Der Kommandant wird dadurch lediglich mit Risiken konfrontiert, die sich im gegebenen Szenario innerhalb der Grenzen des Akzeptablen befinden.

Aufgabe der vorliegenden Erfindung ist es somit, ein Verfahren sowie eine Vorrichtung bereitzustellen, die je nach Missionsszenarium der Besatzung bestimmte Entscheidungen abnimmt und so die Gefahr von Fehlentscheidungen minimiert.

Gelöst für diese Aufgabe durch das Verfahren mit den Merkmalen des Anspruchs 1 sowie der Vorrichtung mit den Merkmalen des Anspruchs 10.

Beansprucht wird dabei ein Verfahren zur Festlegung von Sicherheitsfunktionen in einem Fahrzeug, mit einer Vorauswahl und einem Gefechtsschalter. Die Vorauswahl ist so gestaltet, dass die Fahrzeugbesatzung keinen Zugriff darauf hat, sondern die Vorauswahl durch den Fahrzeughersteller bzw. dem Wartungspersonal getroffen wird.

Durch die Vorauswahl wird das Szenarium, in welchem das Fahrzeug agiert, festgelegt. So kann durch die Vorauswahl festgelegt werden, dass das Fahrzeug im Friedensmodus agiert. Ebenso kann festgelegt werden, dass das Fahrzeug in einem Bereitschaftsmodus agiert oder in einem Kriegsmodus, was dem vorgenannten Verteidigungsbetrieb entspricht.

Durch diese Vorauswahl werden bestimmte Sicherheitsfunktionen im Fahrzeug ausgewählt, um die Sicherheit des Fahrzeugs zu gewährleisten. So kann im Friedensmodus beispielsweise eingestellt werden, dass ein Turm bzw. eine Waffe des Fahrzeugs nicht feuerbereit ist, solange beispielsweise eine Dachluke des Fahrzeugs geöffnet ist. Durch offenstehende Luken kann bei der Drehbewegung der Waffe die Luke beschädigt werden, sowie auch die entsprechende Waffe.

Eine weitere Möglichkeit wäre das Waffe oder Fahrzeugturm einsetzbar sind, wenn der Motor des Fahrzeugs ausgeschaltet ist oder das Fahrzeug nur dann Fahrbereit zu machen, wenn die Waffensysteme deaktiviert sind. Weiterhin ist es denkbar, den Schussbereich der Waffe im Friedensbetrieb zu beschränken. Das bedeutet, dass die Waffensysteme in einem gewissen Winkel keine Schüsse abgeben können. Dies dient der Sicherheit des Personals am Fahrzeug sowie auch der umliegenden Umgebung.

Ebenfalls kann vorgesehen sein, dass der Betrieb der Motoren des Fahrzeugs bzw. der Antriebe nur dann möglich ist, wenn Türen und Luken des Fahrzeugs geschlossen sind. Auch diese Sicherheitseinschränkung dient der Sicherheit des Personals im Fahrzeug sowie der umliegenden Personen.

Das Verfahren umfasst weiterhin ein Gefechtsschalter, welcher von der Fahrzeugmannschaft bedient werden kann und dazu ausgebildet ist, Sicherheitsfunktionen, die über die Vorauswahl festgelegt wurden, zumindest teilweise außer Kraft zu setzen. So kann es notwendig sein, dass im Friedensbetrieb das Fahrzeug mit offener Luke bewegt werden muss oder die Waffe um einen gewissen Winkel gedreht werden soll.

Je nach Definition der Vorauswahl kann durch den Gefechtsschalter mindestens eine Sicherheitsfunktionen außer Kraft gesetzt werden. Welche Sicherheitsfunktionen und wie viele durch den Gefechtsschalter außer Kraft gesetzt werden, können durch die Vorauswahl festgelegt werden.

In einer besonderen Ausführungsform ist die Vorauswahl als Schlüssel oder Dongle ausgeführt, welcher vor Missionsantritt dem Fahrzeug zugeführt wird, um das Missionsszenarium des Fahrzeugs festzulegen.

In einer bevorzugten Ausführungsform kann durch die Vorauswahl das Fahrzeug in eins von drei verschiedenen Betriebsmodi versetzt werden, nämlich einen Friedensmodus, einen Bereitschaftsmodus und ein Kriegsmodus. Je nach Modus sind dann einzelne Sicherheitsfunktionen im Fahrzeug in Funktion und je nach Betriebsmodus ist vordefiniert, welche dieser Sicherheitsfunktionen durch den Betriebsschalter außer Kraft gesetzt werden können.

Die zu aktivierenden bzw. außer Kraft zu setzenden Sicherheitsfunktionen sind natürlich nicht auf die vorgenannten beschränkt, sondern je nach Fahrzeugtyp und Einsatzgebiet vielfältig. Gemeinsam ist dem Verfahren jedoch, das per Vorauswahl verschiedene Szenarien bzw. Betriebsmodi mit unterschiedlichen Sicherheitsfunktionen gewählt werden können und zumindest teilweise durch den Gefechtsschalter wieder deaktiviert werden können.

Folgende Sicherheitsfunktionen sind beispielsweise je nach Vorauswahl und Gefechtsschalter denkbar (GF bedeutet aktivierter Gefechtsschalter):

| | Frieden | Frieden+GS | Bereitschaft | Bereitschaft+GS | Krieg | Krieg+GS |
|---|---|---|---|---|---|---|
| Turmbewegung mit offenen Luken | nein | Limitiert auf bestimmte Luken | nein | Limitiert auf alle Luken bis auf eine Hauptluke | ja, wird jedoch notiert | ja |
| Turmbewegung mit offenen Luken und Abhängig vom Azimutwinkel | nein | ja | ja | ja | ja | ja (permanent aktiviert) |
| Turmbewegung bei bestimmten Waffenpositionen | manuell | manuell | manuell | elektrisch | elektrisch | elektrisch |
| Feuern einer Waffe bei offenen Luken | nein | nein | ja, abhängig von der Luke | ja | ja | ja |
| Feuern einer Waffe mit offenen Luken und Abhängig vom Azimutwinkel | nein | nein | ja | ja | ja | ja (permanent aktiviert) |

Ebenfalls erfindungsgemäß vorgesehen ist eine Vorrichtung zur Kontrolle und Anzeige der Sicherheitsfunktionen des Fahrzeugs bei Verwendung des vorgenannten Verfahrens. Dazu beinhaltet die Vorrichtung einen Gefechtsschalter und Mittel zur Darstellung der Sicherheitsfunktionen. Diese Mittel zur Darstellung der Sicherheitsfunktionen können optisch und/oder akustisch ausgebildet sein, sodass die Sicherheitsfunktionen beispielsweise als Symbol, Farbe, Animation oder Schema dargestellt wird. Auch eine Kombination aus den vorgenannten es denkbar.

Bevorzugt beinhaltet die Vorrichtung Mittel zur Darstellung von Informationen durch welche angezeigt werden kann, ob eine Sicherheitsfunktion ein oder ausgeschaltet ist. Das bedeutet, dass je nach Vorauswahl Sicherheitsfunktionen eingeschaltet sind und durch die Wahl des Gefechtsschalters diese ein oder ausgeschaltet dargestellt werden können.

Weiterhin ist besonders vorgesehen, dass alle möglichen Betriebsmodi an der Vorrichtung darstellbar sind. Je nach Vorauswahl werden dann die entsprechenden Betriebsmodi angezeigt und zusätzlich kann angezeigt werden, ob durch den Gefechtsschalter Funktionen außer Betrieb gesetzt sind oder nicht.

Zur Übersichtlichkeit ist besonders vorgesehen, dass die Vorrichtung ein Schema des Fahrzeugs beinhaltet. Entsprechende Funktionen können dann an der Stelle des Schemas dargestellt werden, an welcher sie auch im Fahrzeug tatsächlich vorhanden sind.

Da insbesondere auf die Zustände der im Fahrzeug befindlichen Luken abgestellt wird, wird ebenfalls besonders vorgeschlagen, auch die Luken in der Vorrichtung darzustellen und auch anzuzeigen, ob diese geschlossen oder geöffnet sind.

Besonders bevorzugt wird vorgeschlagen, dass hervorzuhebende Sicherheitsfunktionen mittels spezieller Farben und/oder durch blinken dargestellt werden, um die Aufmerksamkeit der Besatzung auf diese Sicherheitsfunktionen zu lenken.

Durch das vorgenannte Verfahren und die Vorrichtung lassen sich im Gegensatz zu einem herkömmlichen Gefechtsschalter eine deutlich flexiblere und zeitgemäßere Lösung implementieren. Sie könnte sowohl an die jeweilige Einsatzdoktrin, Trainingsmethoden des Nutzers, als auch an die spezifischen Bestimmungen, beispielsweise der RoE abgestimmt und bei Bedarf angepasst werden.

Weitere Merkmale ergeben sich aus den beigefügten Zeichnungen. Es zeigen.
Figur 1: eine Blockgrafik der einzustellenden Sicherheitsfunktionen im Fahrzeug.
Figur 2: eine beispielhafte, erfindungsgemäße Vorrichtung zur Anzeige und Kontrolle der Sicherheitsfunktionen im Fahrzeug.

Figur eins zeigt die möglichen Sicherheitsfunktionen bzw. Betriebsmodi, die in einem Fahrzeug abgebildet werden können. So ist eine Vorauswahl 1 vorgesehen, welche nicht durch die Mannschaft beeinflussbar ist. Durch die Vorauswahl 1 wird festgelegt, welche missionsspezifischen Merkmale und Sicherheitsfunktionen das Fahrzeug aufweisen soll. Dazu kann das Fahrzeug in drei verschiedenen Szenarien betrieben werden, nämlich dem Friedensmodus 2, dem Bereitschaftsmodus 3 und dem Kriegsmodus 4.

Die drei vorgenannten Modi 2, 3, 4 weisen jeweils unterschiedliche Sicherheitsfunktionen auf, die im Fahrzeug realisiert sind und durch die Vorauswahl 1 festgelegt werden.

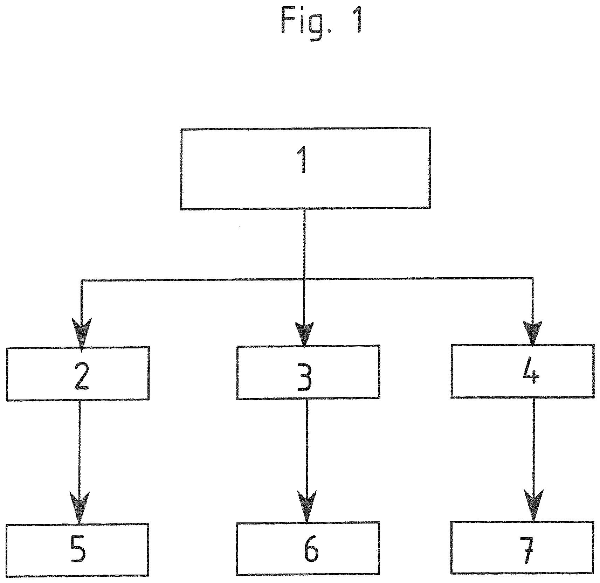

Die Besatzung kann dann mittels eines in der Figur 1 nicht dargestellten Gefechtsschalters die je nach Vorauswahl 1 festgelegten Sicherheitsfunktionen teilweise abschalten. Dadurch wird bei Betätigung des Gefechtsschalters der Betriebsmodus 2, 3, 4 in einen sogenannten "Override" versetzt, in welchem zumindest einige vordefinierte Sicherheitsfunktionen außer Kraft gesetzt werden.

Somit kann durch Betätigung des Gefechtsschalters der Friedensmodus 2 in einen Friedensmodus mit verringerter Sicherheit 5 versetzt werden. Der Bereitschaftsmodus 3 kann in einen Bereitschaftsmodus mit verringerter Sicherheit 6 und der Kriegsmodus 4 in einen Kriegsmodus mit verringerter Sicherheit 7 versetzt werden.

Durch die Betätigung des Gefechtsschalters müssen nicht alle Sicherheitsfunktion außer Kraft gesetzt werden, sondern lediglich die in den jeweils vorliegenden Betriebsmodi 2, 3, 4 vorgesehenen, deaktivierbaren Sicherheitsfunktionen

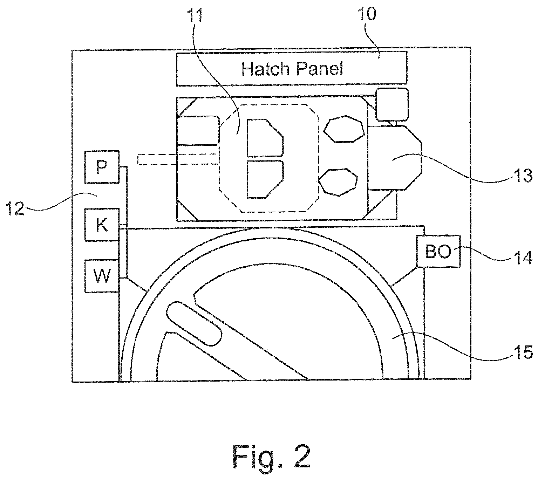

Figur 2 zeigt eine mögliche Vorrichtung zur Kontrolle und Anzeige der Sicherheitsfunktionen im Fahrzeug. Dazu besteht die Vorrichtung aus einem Gefechtsschalter 15 sowie Mittel zur Anzeige der Sicherheitsfunktionen.

So können Informationen 10 angezeigt werden, welche genereller Natur sind. Diese Anzeige kann durch Farben und oder blinken dargestellt werden, aber auch Text beinhalten. Auch akustische Signale sind denkbar.

Ebenfalls vorgesehen ist ein Schema 11 des Fahrzeugs und darin angeordneter Komponenten, die entsprechende Sicherheitsfunktionen aufweisen. Die entsprechenden Sicherheitsfunktionen können dann lokal im Fahrzeug an der Stelle im Schema dargestellt werden, an welcher sie sich tatsächlich befinden.

Ebenfalls vorgesehen ist eine Modusdarstellung 12, bei welcher der voreingestellte Betriebsmodus dargestellt wird. Dieser Betriebsmodus wird durch die Vorauswahl festgelegt und ist nicht von der Besatzung des Fahrzeugs beeinflussbar.

Als besonderes Merkmal wird eine Lukendarstellung 13 vorgeschlagen, da diese einen besonderen Aspekt auf die Sicherheit des Fahrzeugs ausüben kann. Durch die Lukendarstellung 13 kann dargestellt werden, ob eine Luke im Fahrzeug geöffnet oder geschlossen ist. Daraus kann durch die Darstellung gefolgert werden, ob Sicherheitsfunktionen darauf reagieren oder nicht.

Durch die Wahl des Gefechtsschalters 15 können nun spezielle Sicherheitsfunktionen außer Kraft gesetzt werden, was wiederum über die Sicherheitsdarstellung 14 angezeigt werden kann.

Durch Verwendung einer solchen Vorrichtung hat die Besatzung jederzeit Übersicht über die aktivierten Sicherheitsfunktionen und die möglichen deaktivierbaren Sicherheitsfunktionen

Die vorliegende Erfindung ist nicht auf die vorgenannten Merkmale beschränkt. Vielmehr sind weitere Ausführungen denkbar. So können zusätzliche Signalgeber, wie beispielsweise Rundumleuchten im Fahrzeug angeordnet werden, um entsprechende Sicherheitsfunktionen anzuzeigen. Weiterhin könnte als Mittel zur Darstellung von Informationen angezeigt werden, welche verwendete Sicherheitsfunktionen aktiv sind oder durch welche Sicherheitseinstellungen diese blockiert oder deaktivierbar sind.

### BEZUGSZEICHENLISTE

- 1: Vorauswahl
- 2: Friedensmodus mit Sicherheit
- 3: Bereitschaftsmodus mit Sicherheit
- 4: Kriegsmodus mit Sicherheit
- 5: Friedensmodus mit verringerter Sicherheit
- 6: Bereitschaftsmodus mit verringerter Sicherheit
- 7: Kriegsmodus mit verringerter Sicherheit

- 10: Information
- 11: Schema
- 12: Modusdarstellung
- 13: Lukendarstellung
- 14: Sicherheitsdarstellung
- 15: Gefechtsschalter

## Patentansprüche

1. Verfahren zur Festlegung von Sicherheitsfunktionen in einem Fahrzeug,
mit einer Vorauswahl (1) und einem Gefechtsschalter (15),
wobei durch den Gefechtsschalter (15) Sicherheitsfunktionen im Fahrzeug ausgeschaltet werden können
und durch die Vorauswahl (1) die ausschaltbaren Sicherheitsfunktionen ausgewählt werden können.

2. Verfahren nach Anspruch 1, **dadurch gekennzeichnet, dass** durch die Vorauswahl (1) auch die nicht ausschaltbaren Sicherheitsfunktionen ausgewählt werden können.

3. Verfahren nach Anspruch 1 oder 2, **dadurch gekennzeichnet, dass** die ausschaltbaren und die nicht ausschaltbaren Sicherheitsfunktionen durch den Hersteller oder von Wartungspersonal definiert werden können.

4. Verfahren nach einem der Ansprüche 1 bis 3, **dadurch gekennzeichnet, dass** die Vorauswahl (1) durch einen Schlüssel oder Dongle geschieht.

5. Verfahren nach Anspruch 4, **dadurch gekennzeichnet, dass** der Schlüssel oder Dongle durch das Bedienpersonal des Fahrzeugs nicht zugänglich ist.

6. Verfahren nach einem der Ansprüche 1 bis 5, **dadurch gekennzeichnet, dass** durch die Vorauswahl (1) drei Betriebsmodi des Fahrzeugs mit unterschiedlichen ausschaltbaren Sicherheitsfunktionen ausgewählt werden können, nämlich Friedensmodus (2), Bereitschaftsmodus (3) und Kriegsmodus (4).

7. Verfahren nach Anspruch 6, **dadurch gekennzeichnet, dass** nach Auswahl einer der drei Betriebsmodi (2, 3, 4) durch die Vorauswahl (1) mittels dem Gefechtsschalter (15) entsprechende drei Betriebsmodi (5, 6, 7) ohne ausschaltbare Sicherheitsfunktionen ausgewählt werden können.

8. Verfahren nach einem der Ansprüche 1 bis 7, **dadurch gekennzeichnet, dass** durch die Vorauswahl (1) und dem Gefechtsschalter (15) ausgewählte Funktionszustände im Fahrzeug durch optische und/oder akustische Mittel angezeigt werden.

9. Verfahren nach einem der Ansprüche 1 bis 8, **dadurch gekennzeichnet, dass** die Sicherheitsfunktionen im Fahrzeug insbesondere die Bewegung einer Waffe oder eines Turms bei einer geöffneter Luke, die Bewegung einer Waffe oder eines Turms bei ausgeschaltetem Motor des Fahrzeugs, die Gefechtsbereitschaft einer Waffe oder eines Turms bei einer geöffneten Luke beinhalten.

10. Vorrichtung zur Kontrolle und Anzeige der Sicherheitsfunktionen eines Fahrzeugs bei Verwendung des Verfahrens nach einem der Ansprüche 1 bis 9, **dadurch gekennzeichnet, dass** die Vorrichtung einen Gefechtsschalter (15) und Mittel zur Darstellung der Sicherheitsfunktionen beinhaltet.

11. Vorrichtung nach Anspruch 10, **dadurch gekennzeichnet, dass** die Vorrichtung Mittel zur Darstellung von Informationen (11) beinhaltet, durch welche angezeigt werden kann, ob eine Sicherheitsfunktion ein- oder ausgeschaltet ist.

12. Vorrichtung nach Anspruch 10 oder 11, **dadurch gekennzeichnet, dass** die Vorrichtung ein Schema (12) des Fahrzeugs beinhaltet.

13. Vorrichtung nach einem der Ansprüche 10 bis 12, **dadurch gekennzeichnet, dass** die Vorrichtung Mittel zur Darstellung des gewählten Betriebsmodus und/oder eine Sicherheitsdarstellung (14) der Auswahl des Gefechtsschalters (15) beinhaltet.

14. Vorrichtung nach einem der Ansprüche 10 bis 13, **dadurch gekennzeichnet, dass** die Vorrichtung Mittel zur Darstellung einer Luke (13) beinhaltet.

15. Vorrichtung nach einem der Ansprüche 10 bis 14, **dadurch gekennzeichnet, dass** die verschiedenen Mittel zur Darstellung und/oder das Schema (12) verschiedene Farben nutzen und/oder blinken können.

## Claims

1. A method for defining safety functions in a vehicle, having a preselection (1) and a combat switch (15),
wherein
safety functions can be overridden in the vehicle by the combat switch (15) and the safety functions that can be overridden can be selected by the preselection (1).

2. The method as claimed in claim 1, **characterized in that** the safety functions that cannot be overridden can also be selected by the preselection (1).

3. The method as claimed in claim 1 or 2, **characterized in that** the safety functions that can be overridden and cannot be overridden can be defined by the manufacturer or by maintenance personnel.

4. The method as claimed in one of claims 1 to 3, **characterized in that** the preselection (1) is realized by a key or dongle.

5. The method as claimed in claim 4, **characterized in that** the key or dongle cannot be accessed by the vehicle's operating personnel.

6. The method as claimed in one of claims 1 to 5, **characterized in that** three vehicle operating modes with different safety functions that can be overridden can be selected by the preselection (1), namely peace mode (2), standby mode (3) and war mode (4).

7. The method as claimed in claim 6, **characterized in that** following the selection of one of the three operating modes (2, 3, 4) by the preselection (1), three corresponding operating modes (5, 6, 7) without safety functions that can be overridden can be selected by means of the combat switch (15).

8. The method as claimed in one of claims 1 to 7, **characterized in that** the functional states in the vehicle selected by the preselection (1) and the combat switch (15) are indicated by optical and/or acoustic means.

9. The method as claimed in one of claims 1 to 8, **characterized in that** the safety functions in the vehicle include, in particular, the movement of a weapon or a turret with a hatch open, the movement of a weapon or a turret with the vehicle engine switched off, the combat-readiness of a weapon or a turret with a hatch open.

10. A device for monitoring and displaying a vehicle's safety functions when using the method as claimed in one of claims 1 to 9, **characterized in that** the device contains a combat switch (15) and means for displaying the safety functions.

11. The device as claimed in claim 10, **characterized in that** the device contains means for displaying information (11) which can be used to indicate whether a safety function is switched on or off.

12. The device as claimed in claim 10 or 11, **characterized in that** the device contains a diagram (12) of the vehicle.

13. The device as claimed in one of claims 10 to 12, **characterized in that** the device contains means for representing the selected operating mode and/or a safety representation (14) of the selection of the combat switch (15).

14. The device as claimed in one of claims 10 to 13, **characterized in that** the device contains means for representing a hatch (13).

15. The device as claimed in one of claims 10 to 14, **characterized in that** the various means for representation and/or the diagram (12) can use different colors and/or flash.

## Revendications

1. Procédé pour établir des fonctions de sécurité dans un véhicule comprenant une présélection (1) et un commutateur de combat (15),
dans lequel
des fonctions de sécurité peuvent être neutralisées dans le véhicule par le commutateur de combat (15),
et les fonctions de sécurité neutralisables peuvent être sélectionnées par la présélection (1).

2. Procédé selon la revendication 1, **caractérisé en ce que** les fonctions de sécurité non neutralisables peuvent également être sélectionnées par la présélection (1).

3. Procédé selon la revendication 1 ou 2, **caractérisé en ce que** les fonctions de sécurité neutralisables et non neutralisables peuvent être établies par le fabricant ou par le personnel de maintenance.

4. Procédé selon l'une des revendications 1 à 3, **caractérisé en ce que** la présélection (1) est réalisée par une clé ou un dongle.

5. Procédé selon la revendication 4, **caractérisé en ce que** la clé ou le dongle n'est pas accessible par le personnel d'exploitation du véhicule.

6. Procédé selon l'une des revendications 1 à 5, **caractérisé en ce que** trois modes d'exploitation du véhicule avec différentes fonctions de sécurité neutralisables peuvent être sélectionnés par la présélection (1), à savoir le mode de paix (2), le mode de veille (3) et le mode de guerre (4).

7. Procédé selon la revendication 6, **caractérisé en ce qu'**après la sélection de l'un des trois modes d'exploitation (2, 3, 4) par la présélection (1), trois modes d'exploitation correspondants (5, 6, 7) sans fonctions de sécurité neutralisables peuvent être sélectionnés au moyen du commutateur de combat (15).

8. Procédé selon l'une des revendications 1 à 7, **caractérisé en ce que** les états de fonctionnement dans le véhicule sélectionnés par la présélection (1) et le commutateur de combat (15) sont indiqués par des moyens optiques et/ou acoustiques.

9. Procédé selon l'une des revendications 1 à 8, **caractérisé en ce que** les fonctions de sécurité dans le véhicule comprennent en particulier le mouvement d'une arme ou d'une tourelle avec une trappe ouverte, le mouvement d'une arme ou d'une tourelle avec le moteur du véhicule coupé, la disponibilité au combat d'une arme ou d'une tourelle avec une trappe ouverte.

10. Dispositif pour surveiller et afficher des fonctions de sécurité d'un véhicule lors de l'utilisation du procédé selon l'une des revendications 1 à 9, **caractérisé en ce que** le dispositif comprend un commutateur de combat (15) et des moyens pour afficher les fonctions de sécurité.

11. Dispositif selon la revendication 10, **caractérisé en ce que** le dispositif comprend des moyens pour afficher des informations (11) qui permettent d'indiquer si une fonction de sécurité est activée ou désactivée.

12. Dispositif selon la revendication 10 ou 11, **caractérisé en ce que** le dispositif comprend un schéma (12) du véhicule.

13. Dispositif selon l'une des revendications 10 à 12, **caractérisé en ce que** le dispositif comprend des moyens pour représenter le mode d'exploitation sélectionné et/ou une représentation de sécurité (14) de la sélection du commutateur de combat (15).

14. Dispositif selon l'une des revendications 10 à 13, **caractérisé en ce que** le dispositif comprend des moyens pour représenter une trappe (13).

15. Dispositif selon l'une des revendications 10 à 14, **caractérisé en ce que** les différents moyens de représentation et/ou le schéma (12) peuvent utiliser des couleurs et/ou des clignotement différents.
